# EUROPÄISCHE PATENTSCHRIFT

(11) **EP 3 762 265 B1**
(45) Veröffentlichungstag und Bekanntmachung des Hinweises auf die Patenterteilung: **26.01.2022**
(21) Anmeldenummer: 19709683.7
(22) Anmeldetag: 06.03.2019
(51) Int. Cl.: B60R 21/231, B60R 21/233, B60R 21/2338, B60R 21/263

(54) **GASSACK SOWIE GASSACKMODUL FÜR EIN KRAFTFAHRZEUG MIT EINEM SOLCHEN GASSACK**
AIRBAG AND AIRBAG MODULE FOR A MOTOR VEHICLE HAVING SUCH AN AIRBAG
COUSSIN GONFLABLE AINSI QUE MODULE DE COUSSIN GONFLABLE POUR UN VÉHICULE AUTOMOBILE ÉQUIPÉ D'UN COUSSIN GONFLABLE DE CE TYPE

(30) Priorität: 06.03.2018 DE 202018101242 U
(43) Veröffentlichungstag der Anmeldung: 13.01.2021
(73) Patentinhaber: ZF Automotive Safety Germany GmbH, 63743 Aschaffenburg (DE)
(72) Erfinder: SAPOUNTZIS, Stefan, 63906 Erlenbach a. Main (DE); FRANCO, Bartolomeu, 4900-427 Viana do Castelo (PT); CARDOSO, Tiago, 4910-055 Argela, Caminha (PT); SCHÜTZ, Dominik, 63872 Heimbuchenthal (DE)
(74) Vertreter: ZF Patentabteilung - DIPS
(86) Internationale Anmeldenummer: PCT/EP2019/055504
(87) Internationale Veröffentlichungsnummer: WO 2019/170708

(56) Entgegenhaltungen:
- DE-A1- 3 833 888
- DE-A1- 3 833 889
- DE-A1- 10 333 991
- FR-A1- 2 724 350

## Beschreibung

Die Erfindung betrifft ein Gassackmodul mit den Merkmalen im Oberbegriff des Anspruchs 1, mit einem Gassack zur Entfaltung zwischen einem Fahrzeugteil, insbesondere einem um eine Lenkachse drehbaren Fahrzeuglenkrad, und einem Fahrzeuginsassen.

In der DE 38 33 889 A1 ist bereits ein gattungsgemäßes Gassackmodul für ein Kraftfahrzeug beschrieben, mit einem Gassack, der einen torusförmigen Aufprallsack sowie ein zentrales Spanntuch zur Insassenrückhaltung aufweist.

Die Bestrebungen hin zum automatisierten oder autonomen Fahren bringen auch im Bereich der Fahrzeugsicherheitseinrichtungen neue Anforderungen mit sich. So befindet sich der Fahrer beispielsweise nicht mehr zwangsläufig in seiner derzeit üblichen, aktiven Fahrposition, sondern kann sich zumindest temporär in eine passive Passagierposition begeben, in der beispielsweise der Sitz und/oder die Lehne zur Entspannung nach hinten verstellt sind.

Ein herkömmlicher, auf die aktive Fahrposition ausgerichteter Fahrergassack gewährt in dieser passiven Passagierposition des Fahrers bei einem Unfall keinen optimalen Schutz und weist unter den neuen Randbedingungen ein gewisses Verbesserungspotential auf.

Aufgabe der Erfindung ist daher die Schaffung eines Gassackmoduls mit einem Gassack, der sowohl in einer aktiven Fahrposition als auch in einer passiven Passagierposition des Fahrers mit geringem Aufwand eine der Sitzposition angepasste Rückhaltewirkung und damit einen zufriedenstellenden Insassenschutz bereitstellt.

Erfindungsgemäß wird diese Aufgabe gelöst durch ein Gassackmodul mit den Merkmalen des Anspruchs 1. Über die beiden unterschiedlichen Gassackvolumina lässt sich die Geometrie und/oder die Härte des Gassacks mit geringem Aufwand an eine Sitzposition des Insassen anpassen. So ergibt sich beim Aufblasen des ersten Gassackvolumens zum Beispiel eine auf die eher lenkradnahe aktive Fahrposition des Insassen abgestimmte erste Gassackkonfiguration, während sich beim Aufblasen des zweiten Gassackvolumens eine von der ersten Gassackkonfiguration verschiedene, zweite Gassackkonfiguration ergibt, die zum Beispiel auf die eher "lenkradferne" passive Passagierposition des Insassen abgestimmt ist. Die Hinterlegung von Randbedingungen in der Steuereinheit zur Beaufschlagung des ersten Gassackvolumens oder des zweiten Gassackvolumens mit Generatorgas ist dabei so zu verstehen, dass wahlweise entweder das erste Gassackvolumen oder das zweite Gassackvolumen mit Generatorgas beaufschlagt ist und niemals beide Gassackvolumina gleichzeitig aufgeblasen werden.

Die Tatsache, dass das erste Gassackvolumen vom zweiten Gassackvolumen getrennt ist, bedeutet hier mit anderen Worten, dass keine Strömungsverbindung zwischen den beiden Gassackvolumina besteht. Bei der Gassackentfaltung wird Generatorgas wahlweise dem ersten Gassackvolumen oder dem zweiten Gassackvolumen zugeführt, und zwar über einen dem ersten Gassackvolumen zugeordneten ersten Gassackmund bzw. über einen dem zweiten Gassackvolumen zugeordneten, vom ersten Gassackmund verschiedenen zweiten Gassackmund. Nach dem Aufblasen des ersten oder zweiten Gassackvolumens ist aufgrund der Trennung der beiden Gassackvolumina ein Überströmen von Generatorgas in das andere Gassackvolumen nicht mehr möglich.

Es ist bevorzugt, dass der wenigstens eine Ringschlauch bei aufgeblasenem ersten Gassackvolumen einen im Wesentlichen kreisförmigen Ringquerschnitt aufweist und bei aufgeblasenem zweiten Gassackvolumen axial zugbelastet ist, sodass die radial innere Lage und eine radial äußere Lage der Umfangswand aneinander angrenzen, insbesondere aneinander anliegen, und sich im Wesentlichen in axialer Richtung erstrecken. Der kreisförmige Ringschlauchquerschnitt führt dabei zu einer kürzeren axialen Abmessung der Umfangswand als der langgestreckte Ringschlauchquerschnitt. Folglich lässt sich abhängig vom aufgeblasenen Gassackvolumen in vorteilhafter Weise ein axialer Abstand zwischen dem Fahrzeugteil und der Prallwand variieren.

In einer Ausführungsform des Gassacks ist ein axialer Abstand zwischen der Prallwand und dem Fahrzeugteil bei aufgeblasenem zweiten Gassackvolumen größer, vorzugsweise um einen Faktor von wenigstens 1,3 größer, als bei aufgeblasenem ersten Gassackvolumen. Handelt es sich bei dem Fahrzeugteil um ein Fahrzeuglenkrad, bemisst sich dieser Abstand konkret zwischen der Prallwand und einer durch den Lenkradkranz des Fahrzeuglenkrads aufgespannten Lenkradebene. Vorzugsweise erstreckt sich die Prallwand dabei etwa parallel zur Lenkradebene.

Ferner kann das zweite Gassackvolumen größer, insbesondere eineinhalbmal bis zweimal so groß wie das erste Gassackvolumen. Bei derselben zur Verfügung stehenden Gasmenge ergibt sich folglich für das aufgeblasene zweite Gassackvolumen ein geringerer Innendruck als für das aufgeblasene erste Gassackvolumen. Dies ist jedoch insbesondere dann unkritisch oder sogar gewünscht, wenn das aufgeblasene zweite Gassackvolumen auch eine größere axiale Abmessung aufweist und damit eine größere Eintauchtiefe für den Fahrzeuginsassen bereitstellt. Diese größere Eintauchtiefe bei geringerem Innendruck bedeutet nämlich letztlich eine "sanftere" Rückhaltung für den Insassen.

Vorzugsweise erstrecken sich Fangbänder durch das zweite Gassackvolumen und verbinden jeweils gegenüberliegende Abschnitte der Umfangswand, konkret gegenüberliegende Abschnitte der jeweils inneren Lage der mehrlagigen Umfangswand. Die Fangbänder sind insbesondere in einer oder mehreren Ebenen senkrecht zur Lenkachse jeweils sternförmig angeordnet, um beim Aufblasen des zweiten Gassackvolumens eine annähernd zylindrische Gassackform zu erhalten.

Gemäß einer weiteren Ausführungsform des Gassacks bildet die Umfangswand mehrere in axialer Richtung hintereinander angeordnete Ringschläuche aus, die untereinander in Strömungsverbindung stehen. Auf diese Weise lässt sich der Unterschied zwischen den axialen Gassackabmessungen bei einer Befüllung des ersten bzw. zweiten Gassackvolumens mit geringem Aufwand vergrößern, ohne dass die zur Verfügung gestellte Menge an Generatorgas erhöht werden muss.

In dieser Ausführungsform des Gassacks können in der Umfangswand geeignete Nähte zur Unterteilung in mehrere Ringschläuche vorgesehen sein.

Vorzugsweise ist das Fahrzeugteil ein um eine Lenkachse drehbares Fahrzeuglenkrad, wobei der Ringschlauch im eingebauten und entfalteten Zustand des Gassacks die Lenkachse umschließt. Auf diese Weise lässt sich eine fahrerseitige Insassenrückhaltung mit geringem Aufwand an den Abstand des Fahrers vom Lenkrad anpassen. Dies ist insbesondere bei Fahrzeugen vorteilhaft, die neben einem manuellen Fahrmodus auch einen autonomen Fahrmodus aufweisen, da der Abstand des Fahrers vom Lenkrad in diesem Fall deutlich stärker variiert als bei Fahrzeugen ohne autonomen Fahrmodus.

Im Allgemeinen muss jedoch lediglich eine zuverlässige Abstützung des aufgeblasenen Gassacks im Rückhaltefall gewährleistet sein. Dementsprechend kann es sich bei dem Fahrzeugteil auch um andere geeignete Abstützteile im Fahrzeug handeln, insbesondere um einen Abschnitt einer Armaturentafel. Analog zum Lenkradkranz des Fahrzeuglenkrads kann sich der Gassack dann beispielsweise an einem flächigen, gegebenenfalls leicht gewölbten Abschnitt der Armaturentafel abstützen. Somit lässt sich auch eine beifahrerseitige Insassenrückhaltung mit geringem Aufwand an den Abstand des Beifahrers von der Armaturentafel anpassen.

Gemäß einer Ausführungsform des Gassackmoduls ist der Gasgenerator einstufig ausgeführt und gibt bei seiner Aktivierung genau eine vorbestimmte Gasmenge frei, welche wahlweise dem ersten Gassackvolumen oder dem zweiten Gassackvolumen zuführbar ist. Somit wird auf eine vergleichsweise komplexe, zweistufige Ausführung des Gasgenerators verzichtet. Dies ist insbesondere dann problemlos möglich, wenn bei unterschiedlichem ersten und zweiten Gassackvolumen das größere Gassackvolumen auch eine größere Gassacktiefe aufweist. Der bei gleicher eingeblasener Gasmenge entstehende, geringere Innendruck des größeren Gassackvolumens führt dann zwar zu einer größeren Eintauchtiefe des Insassen, was jedoch aufgrund der größeren axialen Erstreckung des Gassackvolumens nicht nachteilig ist, sondern sogar eher zu einer "sanfteren" Insassenrückhaltung führt.

In dieser Ausführungsform ist bevorzugt eine Gasleiteinrichtung vorgesehen, welche über die Steuereinheit so verstellbar ist, dass sie freigegebenes Generatorgas wahlweise dem ersten Gassackvolumen oder dem zweiten Gassackvolumen zuführt.

Gemäß einer alternativen Ausführungsform des Gassackmoduls ist der Gasgenerator zweistufig ausgeführt und jeder Generatorstufe ein separater Gasauslass zugeordnet, wobei das erste Gassackvolumen an den Gasauslass einer ersten Generatorstufe und das zweite Gassackvolumen an den Gasauslass einer zweiten Generatorstufe angeschlossen ist. Im Vergleich zu einstufigen Gasgeneratoren beanspruchen zweistufige Gasgeneratoren einen größeren Bauraum und sind in der Herstellung aufwendiger und teurer. Demgegenüber ist allerdings kein Kompromiss bei der Bestimmung einer einheitlichen Gasmenge zur Befüllung der beiden unterschiedlich großen Gassackvolumina nötig. Vielmehr kann die freigegebene Gasmenge der jeweiligen Generatorstufe individuell auf die Größe des zugeordneten Gassackvolumens und eine gewünschte Rückhaltewirkung abgestimmt werden. Auch bei dieser Ausführungsform ist zu betonen, dass stets entweder die erste Generatorstufe zur Befüllung des ersten Gassackvolumens oder die zweite Generatorstufe zur Befüllung des zweiten Gassackvolumens aktiviert wird. Auch in diesem Fall werden niemals die beiden voneinander getrennten Gassackvolumina gleichzeitig aufgeblasen. Denkbar wäre allerdings eine Ausführungsvariante, bei welcher das Generatorgas der ersten Generatorstufe analog zum Generatorgas eines zuvor beschriebenen, einstufigen Gasgenerators wahlweise dem ersten Gassackvolumen oder dem zweiten Gassackvolumen zuführbar ist. Das Generatorgas der zweiten Generatorstufe dient dann lediglich als Zusatzgas und ist demjenigen Gassackvolumen zugeordnet, bei dessen Beaufschlagung eine größere Gasmenge gewünscht ist. Folglich lässt sich dieses Gassackvolumen dann mit dem Generatorgas beider Generatorstufen oder das andere Gassackvolumen nur mit dem Generatorgas der ersten Generatorstufe befüllen.

Weitere Merkmale und Vorteile der Erfindung ergeben sich aus der nachfolgenden Beschreibung einer bevorzugten Ausführungsform unter Bezugnahme auf die Zeichnungen. In diesen zeigt:
- Figur 1 einen schematischen Schnitt durch ein erfindungsgemäßes Gassackmodul, bei dem ein erstes Gassackvolumen eines erfindungsgemäßen Gassacks aufgeblasen ist; und
- Figur 2 einen weiteren schematischen Schnitt durch das Gassackmodul nach Figur 1, bei dem ein zweites Gassackvolumen des Gassacks aufgeblasen ist.

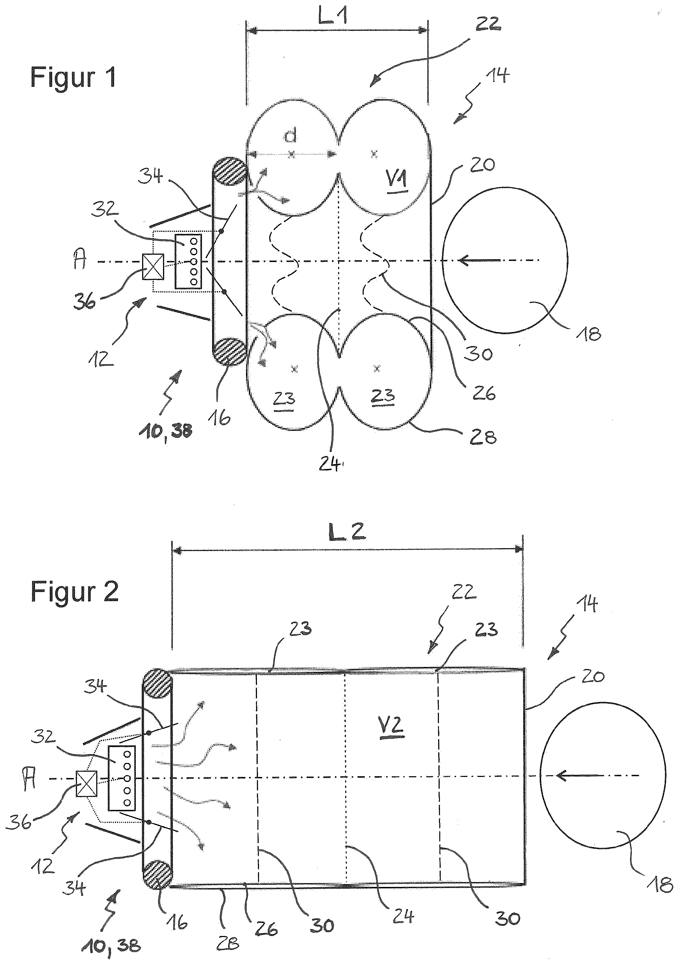

In den Figuren 1 und 2 ist ein um eine Lenkachse A drehbares Fahrzeuglenkrad 38 mit einem Gassackmodul 12 dargestellt, wobei das Gassackmodul 12 einen Gassack 14 zur Entfaltung zwischen einem Lenkradkranz 16 des Fahrzeuglenkrads 38 und einem Fahrzeuginsassen 18 aufweist.

Der Gassack 14 umfasst dabei eine Prallwand 20, die im eingebauten und entfalteten Zustand des Gassacks 14 dem Fahrzeuginsassen 18 zugewandt ist, sowie eine Umfangswand 22, die mit der Prallwand 20 verbunden ist und sich im eingebauten und entfalteten Zustand des Gassacks 14 zwischen der Prallwand 20 und dem Fahrzeuglenkrad 38 erstreckt. Die Prallwand 20 und die Umfangswand 22 des Gassacks 14 sind aus einem flexiblen Material, insbesondere aus einem Gewebe hergestellt.

Die Umfangswand 22 ist zumindest abschnittsweise mehrlagig ausgeführt und bildet wenigstens einen Ringschlauch 23 aus, der die Lenkachse A umschließt sowie ein ringförmiges, aufblasbares erstes Gassackvolumen V1 begrenzt. Im dargestellten Ausführungsbeispiel ist die gesamte Umfangswand 22 zweilagig ausgeführt und bildet zwei in axialer Richtung hintereinander angeordnete, torusartige Ringschläuche 23 aus, die untereinander in Strömungsverbindung stehen.

Wie in den Figuren 1 und 2 als gepunktete Linie angedeutet, sind in der Umfangswand 22 geeignete Nähte 24 oder Abnäher vorgesehen, um das erste Gassackvolumen V1 in einzelne Ringschläuche 23 zu unterteilen.

Ferner begrenzt eine radial innere Lage 26 der mehrlagigen Umfangswand 22 zusammen mit der Prallwand 20 ein vom ersten Gassackvolumen V1 getrenntes, aufblasbares zweites Gassackvolumen V2.

Jeder Ringschlauch 23 weist bei aufgeblasenem ersten Gassackvolumen V1 gemäß Figur 1 einen etwa kreisförmigen Schlauchquerschnitt auf, wohingegen die Ringschläuche 23 bei aufgeblasenem zweiten Gassackvolumen V2 gemäß Figur 2 axial zugbelastet sind, sodass jeweils die radial innere Lage 26 und eine radial äußere Lage 28 der Umfangswand 22 aneinander anliegen und sich im Wesentlichen in axialer Richtung erstrecken. Die flexiblen Ringschläuche 23 werden mit anderen Worten beim Befüllen des ersten Gassackvolumens V1 jeweils zu einem Torus aufgebläht und beim Befüllen des zweiten Gassackvolumens V2 durch den Gassackinnendruck in axialer Richtung so weit wie möglich auseinandergezogen.

Dabei ist ein axialer Abstand L2 zwischen der Prallwand 20 und dem Fahrzeuglenkrad 38, konkret zwischen der Prallwand 20 und einer durch den Lenkradkranz 16 des Fahrzeuglenkrads 38 aufgespannten Ebene bei aufgeblasenem zweiten Gassackvolumen V2 größer, insbesondere um einen Faktor von etwa 1,5 größer, als ein axialer Abstand L1 zwischen der Prallwand 20 und dem Fahrzeuglenkrad 38 bei aufgeblasenem ersten Gassackvolumen V1.

Entsprechend kann das erste Gassackvolumen V1 einer aktiven Fahrposition und das zweite Gassackvolumen V2 einer passiven Passagierposition des Fahrzeuginsassen 18 zugeordnet sein, wobei die Position des Fahrzeuginsassen 18 beispielsweise durch eine Erfassung der Sitzeinstellungen oder optisch durch eine Kamera bestimmt wird.

In der Theorie ergeben sich für das dargestellte Ausführungsbeispiel mit zwei aufeinanderliegenden, exakt kreisförmigen Ringschläuchen 23 Werte von L1 = 2d und L2 = πd, wobei d für den Durchmesser eines Ringschlauchs 23 steht. Dies entspricht einem Faktor von 1,57. Die Durchmesser der einzelnen Ringschläuche 23 sind hier identisch, wobei jedoch selbstverständlich auch Ausführungsvarianten mit unterschiedlichen Ringschlauchdurchmessern denkbar sind.

Soll der theoretische Wert L2 = πd annähernd erreicht werden, muss das zweite Gassackvolumen V2 möglichst zylindrisch ausgebildet sein. Daher sind, wie in den Figuren 1 und 2 gestrichelt angedeutet, Fangbänder 30 vorgesehen, welche sich durch das zweite Gassackvolumen V2 erstrecken und jeweils gegenüberliegende Abschnitte der inneren Lage 26 der Umfangswand 22 verbinden, um gemeinsam mit den Nähten 24 ein übermäßiges "axiales Ausbauchen" der Umfangswand 22 beim Aufblasen des zweiten Gassackvolumens V2 zu verhindern.

Als besonders vorteilhaft hat sich dabei eine Ausführungsvariante erwiesen, bei der sich an wenigstens einer vorbestimmten axialen Position mehrere Fangbänder 30 im Wesentlichen in einer Ebene senkrecht zur Lenkachse A erstrecken, wobei die Fangbänder in axialer Draufsicht sternförmig angeordnet und über den Umfang gleichmäßig verteilt sind. Während die Fangbänder 30 beim Befüllen des ersten Gassackvolumens V1 ohne Funktion bleiben und sich gemäß Figur 1 schlaff durch das (unbefüllte) zweite Gassackvolumen V2 erstrecken, sind die Fangbänder 30 beim Befüllen des zweiten Gassackvolumens V2 gestrafft und bestimmen gemäß Figur 2 den Durchmesser des im Wesentlichen zylindrischen Gassacks 14.

Es ergibt sich ein annähernd kreiszylindrisches zweites Gassackvolumen V2, das im Vergleich zum ersten Gassackvolumen V1 eine deutlich größere axiale Abmessung und einen etwas geringeren maximalen Außendurchmesser aufweist. Abhängig von der Wahl des Schlauchdurchmessers d und des Gassack-Außendurchmessers ist das zweite Gassackvolumen V2 größer, insbesondere etwa eineinhalbmal bis zweimal so groß wie das erste Gassackvolumen V1.

Abgesehen von dem oben beschriebenen Gassack 14 umfasst das Gassackmodul 12 ferner einen Gasgenerator 32 zum Aufblasen des Gassacks 14 sowie eine elektronische Steuereinheit 36 zur Aktivierung des Gasgenerators 32, wobei in der elektronischen Steuereinheit 36 Parameter zur Beaufschlagung des ersten Gassackvolumens V1 oder des zweiten Gassackvolumens V2 mit Generatorgas hinterlegt sind. Die Entscheidung zum Aufblasen des ersten oder zweiten Gassackvolumens V1, V2 erfolgt beispielsweise abhängig von Parametern wie der aktuellen Sitzeinstellung oder einer optisch erfassten Sitzposition des Fahrzeuginsassen 18, welche dann mit entsprechenden, in der elektronischen Steuereinheit 36 hinterlegten Referenzparametern abgeglichen werden.

Der Gasgenerator 32 ist im vorliegenden Ausführungsbeispiel gemäß den Figuren 1 und 2 einstufig ausgeführt, erzeugt also bei seiner Aktivierung genau eine vorbestimmte Gasmenge, welche wahlweise dem ersten Gassackvolumen V1 oder dem zweiten Gassackvolumen V2 zuführbar ist. Hierzu weist das Gassackmodul 12 eine in den Figuren schematisch angedeutete Gasleiteinrichtung 34 auf, welche über die elektronische Steuereinheit 36 so verstellbar ist, dass sie freigegebenes Generatorgas wahlweise in das erste Gassackvolumen V1 oder das zweite Gassackvolumen V2 einleitet.

Dies führt beim Befüllen des größeren, zweiten Gassackvolumens V2 zu einem geringeren Gassackinnendruck als beim Befüllen des kleineren, ersten Gassackvolumens V1 und damit zu einer größeren Eintauchtiefe des Fahrzeuginsassen 18 beim Aufprall auf die Prallwand 20 des Gassacks 14. Die größere Eintauchtiefe ist hier jedoch unkritisch, weil das zweite Gassackvolumen V2 im vorliegenden Ausführungsbeispiel auch eine größere axiale Abmessung aufweist als das erste Gassackvolumen V1.

Alternativ ist jedoch auch denkbar, den Gasgenerator 32 zweistufig auszuführen und jeder Generatorstufe einen separaten Gasauslass zuzuordnen, wobei das erste Gassackvolumen V1 an den Gasauslass einer ersten Generatorstufe und das zweite Gassackvolumen V2 an den Gasauslass einer zweiten Generatorstufe angeschlossen ist. Je nach detektierter Insassenposition aktiviert dann die elektronische Steuereinheit 36 die erste Generatorstufe zum Aufblasen des ersten Gassackvolumens V1 oder die zweite Generatorstufe zum Aufblasen des zweiten Gassackvolumens V2, wobei die freigegebene Gasmenge der jeweiligen Generatorstufe individuell auf die Größe des zugeordneten Gassackvolumens V1, V2 und eine gewünschte Rückhaltewirkung abgestimmt werden kann.

Ferner können anstatt eines zweistufigen Gasgenerators 32 natürlich auch zwei separate (einstufige) Gasgeneratoren 32 zum Einsatz kommen, wobei jedem Gasgenerator 32 ein Gassackvolumen V1, V2 zugeordnet ist.

Bei dem in den Figuren 1 und 2 dargestellten Gassackmodul 12 handelt es sich beispielhaft um ein fahrerseitiges Gassackmodul 12 mit einem Fahrergassack, der sich am Fahrzeuglenkrad 38 abstützt. Statt am Fahrzeuglenkrad 38 kann sich der Gassack 14 jedoch auch an einem anderen Fahrzeugteil 10, beispielsweise an einer Armaturentafel abstützen. In diesem Fall wäre das Gassackmodul 12 dann insbesondere beifahrerseitig angeordnet und der Gassack 14 als Beifahrergassack ausgeführt. Ferner kann das Fahrzeugteil 10 auch ein Fahrzeugsitz, konkret die Rückenlehne eines Fahrzeugsitzes sein, wobei der Gassack 14 dann zum Schutz von Insassen in zweiter oder dritter Reihe vorgesehen ist. Die Sitze der Insassen in zweiter oder dritter Reihe sind insbesondere in ihrer Lage oder Neigung verstellbar, sodass auch in diesem Fall eine Tiefenadaptivität des Gassacks 14 vorteilhaft ist.

Stützt sich der Gassack 14 nicht an einem im Wesentlichen kreisrunden Lenkradkranz 16 des Fahrzeuglenkrads 38 ab, so muss der Gassack 14, in Aufprallrichtung des zu schützenden Insassen gesehen, auch nicht kreisrund ausgeführt sein, sondern kann an die jeweilige Abstützfläche des Fahrzeugteils 10 angepasst und beispielsweise oval oder nahezu rechteckig (mit abgerundeten Ecken) ausgeführt sein.

Im Allgemeinen kann das Gassackmodul 12 überall im Fahrzeug zum Einsatz kommen, wo eine Tiefenadaptivität des Gassacks 14 gewünscht und ein geeignetes Fahrzeugteil 10 zur Abstützung des Gassacks 14 vorgesehen ist.

## Patentansprüche

1. Gassackmodul für ein Kraftfahrzeug, mit
einem Gassack (14) zur Entfaltung zwischen einem Fahrzeugteil (10) und einem Fahrzeuginsassen (18),
einem Gasgenerator (32) zum Aufblasen des Gassacks (14) und
einer Steuereinheit (36) zur Aktivierung des Gasgenerators (32),
wobei der Gassack (14) eine Prallwand (20) aufweist, die im eingebauten und entfalteten Zustand des Gassacks (14) dem Fahrzeuginsassen (18) zugewandt ist, sowie eine Umfangswand (22), die mit der Prallwand (20) verbunden ist und sich im eingebauten und entfalteten Zustand des Gassacks (14) zwischen der Prallwand (20) und dem Fahrzeugteil (10) erstreckt,
wobei die Umfangswand (22) zumindest abschnittsweise mehrlagig ausgeführt ist und wenigstens einen Ringschlauch (23) ausbildet, der ein ringförmiges, aufblasbares erstes Gassackvolumen (V1) begrenzt, und
wobei eine radial innere Lage (26) der Umfangswand (22) zusammen mit der Prallwand (20) ein vom ersten Gassackvolumen (V1) getrenntes, aufblasbares zweites Gassackvolumen (V2) begrenzt,
**dadurch gekennzeichnet, dass** in der Steuereinheit (36) Randbedingungen zur Beaufschlagung des ersten Gassackvolumens (V1) oder des zweiten Gassackvolumens (V2) mit Generatorgas hinterlegt sind.

2. Gassackmodul nach Anspruch 1, **dadurch gekennzeichnet, dass** der wenigstens eine Ringschlauch (23) bei aufgeblasenem ersten Gassackvolumen (V1) einen im Wesentlichen kreisförmigen Schlauchquerschnitt aufweist und bei aufgeblasenem zweiten Gassackvolumen (V2) axial zugbelastet ist, sodass die radial innere Lage (26) und eine radial äußere Lage (28) der Umfangswand (22) aneinander angrenzen und sich im Wesentlichen in axialer Richtung erstrecken.

3. Gassackmodul nach wenigstens einem der vorhergehenden Ansprüche, **dadurch gekennzeichnet, dass** ein axialer Abstand (L) zwischen der Prallwand (20) und dem Fahrzeugteil (10) bei aufgeblasenem zweiten Gassackvolumen (V2) größer ist als bei aufgeblasenem ersten Gassackvolumen (V1).

4. Gassackmodul nach wenigstens einem der vorhergehenden Ansprüche, **dadurch gekennzeichnet, dass** das zweite Gassackvolumen (V2) größer ist als das erste Gassackvolumen (V1).

5. Gassackmodul nach wenigstens einem der vorhergehenden Ansprüche, **dadurch gekennzeichnet, dass** sich Fangbänder (30) durch das zweite Gassackvolumen (V2) erstrecken und jeweils gegenüberliegende Abschnitte der Umfangswand (22) verbinden.

6. Gassackmodul nach wenigstens einem der vorhergehenden Ansprüche, **dadurch gekennzeichnet, dass** die Umfangswand (22) mehrere in axialer Richtung hintereinander angeordnete Ringschläuche (23) ausbildet, welche untereinander in Strömungsverbindung stehen.

7. Gassackmodul nach wenigstens einem der vorhergehenden Ansprüche, **dadurch gekennzeichnet, dass** zur Unterteilung in mehrere Ringschläuche (23) geeignete Nähte (24) in der Umfangswand (22) vorgesehen sind.

8. Gassackmodul nach wenigstens einem der vorhergehenden Ansprüche, **dadurch gekennzeichnet, dass** das Fahrzeugteil (10) ein um eine Lenkachse (A) drehbares Fahrzeuglenkrad (38) ist, wobei der Ringschlauch (23) im eingebauten und entfalteten Zustand des Gassacks (14) die Lenkachse (A) umschließt.

9. Gassackmodul nach wenigstens einem der vorhergehenden Ansprüche, **dadurch gekennzeichnet, dass** der Gasgenerator (32) einstufig ausgeführt ist und bei seiner Aktivierung eine vorbestimmte Gasmenge freigibt, welche wahlweise dem ersten Gassackvolumen (V1) oder dem zweiten Gassackvolumen (V2) zuführbar ist.

10. Gassackmodul nach wenigstens einem der vorhergehenden Ansprüche, **dadurch gekennzeichnet, dass** eine Gasleiteinrichtung (34) vorgesehen ist, welche über die Steuereinheit (36) so verstellbar ist, dass sie freigegebenes Generatorgas wahlweise dem ersten Gassackvolumen (V1) oder dem zweiten Gassackvolumen (V2) zuführt.

11. Gassackmodul nach wenigstens einem der Ansprüche 1 bis 8, **dadurch gekennzeichnet, dass** der Gasgenerator (32) zweistufig ausgeführt und jeder Generatorstufe ein separater Gasauslass zugeordnet ist, wobei das erste Gassackvolumen (V1) an den Gasauslass einer ersten Generatorstufe und das zweite Gassackvolumen (V2) an den Gasauslass einer zweiten Generatorstufe angeschlossen ist.

## Claims

1. An airbag module for an automotive vehicle comprising
an airbag (14) for unfolding between a vehicle part (10) and a vehicle occupant (18),
a gas generator (32) for inflating the airbag (14) and
a control unit (36) for activating the gas generator (32),
the airbag (14) including an impact wall (20) which, in the installed and unfolded state of the airbag (14), faces the vehicle occupant (18) and a circumferential wall (22) which is connected to the impact wall (20) and, in the installed and unfolded state of the airbag (14) extends between the impact wall (20) and the vehicle part (10),
wherein the circumferential wall (22) is made with multiple layers at least in sections and forms at least one annular tube (23) which delimits an annular inflatable first airbag volume (V1), and
wherein a radial inner layer (26) of the circumferential wall (22) together with the impact wall (20) delimits an inflatable second airbag volume (V2) that is separate from the first airbag volume (V1),
**characterized in that** boundary conditions for applying generator gas to the first airbag volume (V1) or to the second airbag volume (V2) are deposited in the control unit (36).

2. The airbag module according to claim 1, **characterized in that**, when the first airbag volume (V1) is inflated, the at least one annular tube (23) has a substantially circular tube cross-section and, when the second airbag volume (V2) is inflated, is subject to axial tensile load so that the radial inner layer (26) and a radially outer layer (28) of the circumferential wall (22) are adjacent to each other and extend substantially in the axial direction.

3. The airbag module according to at least one of the preceding claims, **characterized in that** an axial distance (L) between the impact wall (20) and the vehicle part (10) is larger when the second airbag volume (V2) is inflated than when the first airbag volume (V1) is inflated.

4. The airbag module according to at least one of the preceding claims, **characterized in that** the second airbag volume (V2) is larger than the first airbag volume (V1).

5. The airbag module according to at least one of the preceding claims, **characterized in that** the tethers (30) extend across the second airbag volume (V2) and connect respective opposite portions of the circumferential wall (22).

6. The airbag module according to at least one of the preceding claims, **characterized in that** the circumferential wall (22) forms plural annular tubes (23) arranged in series in the axial direction which are in flow communication with one another.

7. The airbag module according to at least one of the preceding claims, **characterized in that** seams (24) suited for subdivision into plural annular tubes (23) are provided in the circumferential wall (22).

8. The airbag module according to at least one of the preceding claims, **characterized in that** the vehicle part (10) is a steering wheel (38) rotatable about a steering axis (A), wherein the annular tube (23) in the installed and unfolded state of the airbag (14) encloses the steering axis (A).

9. The airbag module according to at least one of the preceding claims, **characterized in that** the gas generator (32) is a single-stage design and, upon activation thereof, releases a predetermined amount of gas which can optionally be supplied to the first airbag volume (V1) or to the second airbag volume (V2).

10. The airbag module according to at least one of the preceding claims, **characterized in that** a gas guiding means (34) is provided which is adjustable via the control unit (36) so that it supplies released generator gas optionally to the first airbag volume (V1) or to the second airbag volume (V2).

11. The airbag module according to at least one of the claims 1 to 8, **characterized in that** the gas generator (32) is a two-stage design and a separate gas outlet is associated with each generator stage, the first airbag volume (V1) being connected to the gas outlet of a first generator stage and the second airbag volume (V2) being connected to the gas outlet of a second generator stage.

## Revendications

1. Module airbag pour un véhicule automobile, comprenant
un coussin gonflable (14) destiné à être déployé entre une partie du véhicule (10) et un occupant du véhicule (18),
un générateur de gaz (32) pour gonfler le coussin gonflable (14) et
une unité de commande (36) pour activer le générateur de gaz (32),
pour lequel le coussin gonflable (14) présentant une paroi d'impact (20) qui, à l'état monté et déployé du coussin gonflable (14), est tournée vers l'occupant (18) du véhicule, ainsi qu'une paroi périphérique (22) qui est reliée à la paroi d'impact (20) et qui, à l'état monté et déployé du coussin gonflable (14), s'étend entre la paroi d'impact (20) et la partie (10) du véhicule,
pour lequel la paroi périphérique (22) es réalisée au moins par sections en plusieurs couches et forme au moins un tuyau annulaire (23) qui délimite un premier volume de coussin gonflable (V1) annulaire pouvant être gonflé, et
pour lequel une couche radiale intérieure (26) de la paroi périphérique (22) délimite, conjointement avec la paroi d'impact (20), un deuxième volume de coussin gonflable (V2) pouvant être gonflé, séparé du premier volume de coussin gonflable (V1),
**caractérisé en ce que** dans l'unité de commande (36) sont enregistrées les conditions limites pour l'alimentation en gaz issu du générateur de gaz du premier volume du coussin gonflable (V1) ou du deuxième volume du coussin gonflable (V2).

2. Module airbag selon la revendication 1, **caractérisé en ce que** le au moins un tuyau annulaire (23) présente une section transversale de tuyau sensiblement circulaire lorsque le premier volume du coussin gonflable (V1) est gonflé et est soumis à une contrainte de traction axiale lorsque le deuxième volume du coussin gonflable (V2) est gonflé, de sorte que la couche radiale intérieure (26) et une couche radiale extérieure (28) de la paroi périphérique (22) sont adjacentes l'une à l'autre et s'étendent sensiblement dans la direction axiale.

3. Module airbag selon au moins l'une des revendications précédentes, **caractérisé en ce qu'**une distance axiale (L) entre la paroi d'impact (20) et la partie de véhicule (10) est plus grande lorsque le deuxième volume du coussin gonflable (V2) est gonflé que lorsque le premier volume du coussin gonflable (V1) est gonflé.

4. Module airbag selon au moins l'une des revendications précédentes, **caractérisé en ce que** le deuxième volume du coussin gonflable (V2) est plus grand que le premier volume du coussin gonflable (V1).

5. Module airbag selon au moins l'une des revendications précédentes, **caractérisé en ce que** des bandes de retenue (30) s'étendent à travers le deuxième volume du coussin gonflable (V2) et relient respectivement des sections opposées de la paroi périphérique (22).

6. Module airbag selon au moins l'une des revendications précédentes, **caractérisé en ce que** la paroi périphérique (22) forme plusieurs tuyaux annulaires (23) disposés les uns derrière les autres dans la direction axiale, qui sont reliés en termes d'écoulement entre eux.

7. Module airbag selon au moins l'une des revendications précédentes, **caractérisé en ce que** des coutures (24) appropriées sont prévues dans la paroi périphérique (22) pour la subdivision en plusieurs tuyaux annulaires (23).

8. Module airbag selon au moins l'une des revendications précédentes, **caractérisé en ce que** la partie de véhicule (10) est un volant de véhicule (38) pouvant tourner autour d'un axe de direction (A), pour lequel le tuyau annulaire (23) entoure l'axe de direction (A) lorsque le coussin gonflable (14) est monté et déployé.

9. Module airbag selon au moins l'une des revendications précédentes, **caractérisé en ce que** le générateur de gaz (32) est réalisé avec un seul étage et libère, lors de son activation, une quantité de gaz prédéterminée qui peut être amenée au choix dans le premier volume du coussin gonflable (V1) ou dans le deuxième volume du coussin gonflable (V2).

10. Module airbag selon au moins l'une des revendications précédentes, **caractérisé en ce qu'**il est prévu un dispositif de guidage du gaz (34) qui peut être réglé par l'intermédiaire de l'unité de commande (36) de telle sorte qu'il amène le gaz libéré issu du générateur de gaz au choix dans le premier volume du coussin gonflable (V1) ou dans le deuxième volume du coussin gonflable (V2).

11. Module airbag selon au moins l'une des revendications 1 à 8, **caractérisé en ce que** le générateur de gaz (32) est réalisé avec deux étages et qu'une sortie de gaz séparée est associée à chaque étage du générateur de gaz, pour lequel le premier volume de coussin gonflable (V1) est raccordé à la sortie de gaz d'un premier étage du générateur de gaz et le deuxième volume du coussin gonflable (V2) est raccordé à la sortie de gaz d'un deuxième étage du générateur de gaz.
